(19) **Europäisches Patentamt / European Patent Office / Office européen des brevets**

(11) **EP 2 656 110 B1**

(12) **FASCICULE DE BREVET EUROPEEN**

(45) Date de publication et mention de la délivrance du brevet:
**21.01.2015 Bulletin 2015/04**

(21) Numéro de dépôt: **11793452.1**

(22) Date de dépôt: **08.12.2011**

(51) Int Cl.:
**G01S 19/36** [(2010.01)]  **G01S 19/20** [(2010.01)]
**G01S 19/21** [(2010.01)]

(86) Numéro de dépôt international:
**PCT/EP2011/072249**

(87) Numéro de publication internationale:
**WO 2012/084539 (28.06.2012 Gazette 2012/26)**

(54) **DISPOSITIF D'ÉLIMINATION DE PERTURBATIONS LOCALES POUR RÉCEPTEUR DE RÉFÉRENCE DE STATIONS SOL GNSS.**

VORRICHTUNG ZUR BESEITIGUNG VON LOKALEN STÖRUNGEN FÜR EMPFÄNGER VON GNSS-BODENSTATIONEN

DEVICE FOR ELIMINATING LOCAL PERTURBATIONS FOR REFERENCE RECEIVER OF GNSS GROUND STATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2010 FR 1005078**

(43) Date de publication de la demande:
**30.10.2013 Bulletin 2013/44**

(73) Titulaire: **THALES**
**92200 Neuilly-sur-Seine (FR)**

(72) Inventeurs:
• **LETESTU, Franck**
**F-26300 Bourg-de-peage (FR)**
• **REVOL, Marc**
**F-26120 Upic (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**US-A- 5 818 389**     **US-A- 6 166 690**
**US-A1- 2008 174 477**

• **D. B. THORNBERG ET AL: "The LAAS Integrated Multipath Limiting Antenna (IMLA)", PROCEEDINGS OF THE 15TH INTERNATIONAL TECHNICAL MEETING OF THE SATELLITE DIVISION OF THE INSTITUTE OF NAVIGATION, 24 septembre 2002 (2002-09-24), pages 2082-2092, XP055005712, Portland, OR, USA**

EP 2 656 110 B1

**Description**

La présente invention concerne un dispositif pour éliminer les signaux parasites reçus sur les antennes des récepteurs de référence pour des stations sol GNSS (Global Navigation Satellite Systems). Elle s'applique plus particulièrement dans le cas des infrastructures sol pour les augmentations systèmes de type SBAS (Satellite Based Augmentation Systems), GBAS (Ground Based Augmentation Systems), ainsi que LAAS (Local Area Augmentation System).

Les stations GNSS de référence, situées au sol à des positions connues *a priori*, contribuent à l'amélioration de la précision de positionnement des systèmes de navigation à bas de signaux GNSS. Malheureusement, les mesures fournies par ces stations peuvent être dégradées pour des raisons liées à l'environnement local à la station de référence. Notamment, les réflexions du signal satellite sur les structures situées dans l'environnement local de l'antenne de réception peuvent entraîner des trajets indirects multiples. Il peut également contenir des sources d'interférences électromagnétiques, notamment les équipements Radio-Fréquence (RF) situées à proximité de la station. Les trajets indirects multiples et les interférences provoquent des erreurs sur les mesures de phase de code et de porteuse des différents signaux satellites GNSS utilisés.

La robustesse des stations de référence aux trajets indirects multiples et aux interférences peut être assurée par utilisation d'une antenne de réception fixe de type FRPA (Fixed Radiated Pattern Antenna). Ces antennes fixes, qu'il s'agisse d'antennes de type « Choke-Ring » ou hélicoïdale, sont conçues dans le but de réaliser par simple filtrage spatial le difficile compromis entre :

- la détection et la poursuite des signaux satellites dès les plus basses élévations, et ;
- la réjection des trajets indirects multiples et des interférences, tous deux majoritairement situés aux basses élévations.

Un inconvénient majeur des antennes fixes de type FRPA est non seulement que ce compromis est très difficile à réaliser à faible élévation, mais également que de telles antennes fixes ne permettent pas l'adaptation du récepteur à l'environnement local de chaque station. En effet, elles ont un diagramme de directivité fixe commun à toutes les stations, ce qui implique de fortes contraintes sur la spécification des sites d'installation. L'utilisation d'antennes fixes manque de souplesse face à la variété des environnements des sites d'installation.

Des études sont en cours pour tenter d'améliorer la robustesse des antennes FRPA aux trajets indirects multiples et aux interférences, en les protégeant grâce à des structures de protection mécanique appelées IMLP (Interference + Multipath Local Protection). Ces protections permettent de mieux maîtriser les réflexions. Mais de telles protections présentent l'inconvénient majeur d'être encombrantes, typiquement un diamètre de 5 à 10 mètres et une hauteur de 2 à 3 mètres et d'être chères à cause des matériaux absorbants utilisés.

La robustesse des stations de référence aux trajets indirects multiples et aux interférences peut également être assurée grâce à des traitements de filtrage fréquentiel et temporel réalisés au niveau du récepteur. Différentes techniques de filtrage sont généralement utilisées selon la nature de la perturbation. Mais un inconvénient majeur de ces techniques est qu'elles ne sont optimales que dans un domaine restreint d'hypothèses relatives à la nature de la perturbation. Du fait de leur spécialisation, elles nécessitent l'implémentation d'autant d'algorithmes dédiés, qui ne sont pas sans impact sur la qualité des mesures extraites, notamment sur la stabilité des biais de phases et sur la cohérence entre phase de code et phase de porteuse. La multiplication des algorithmes complique d'autant la complexité de la validation des performances de la station de référence.

Le traitement spatial adaptatif d'antenne réseau de type CRPA (Controlled Radiation Pattern Antenna) à formation de voie permet de s'adapter automatiquement et sans connaissance *a priori* de la configuration des sites d'installation. Mais ce type de traitement présente de nombreux inconvénients. D'une part, il implique l'utilisation d'une antenne réseau complexe et la mise en oeuvre des traitements associés. D'autre part, il conduit à des récepteurs eux aussi complexes et surtout sensibles aux défauts de calibrage des voies RF. Enfin, ce type de traitement permet la réjection des interférences, mais pas la réjection des trajets indirects multiples.

Il est connu dans l'état de la technique un sytème présenté dans la demande de brevet américain US 2008/0174477 et permettant de supprimer les interférences provoqués par un module de communication et reçues par un module GPS. Les deux modules étant colocalisés. La suppression des interférences se fait par filtrage et soustraction des signaux émis par le module de communication sur les signaux reçu par le module GPS.

Il est connu dans l'état de la technique un procédé, présenté dans le brevet américain US 6,166,690, et permettant l'amélioration de la réception d'un signal GPS en présence d'interférences. Cependant ce procédé ne permet pas une démarche en deux étapes (détection des interférences, puis réjection de ces interférences).

Il est connu dans l'état de la technique un procédé, présenté dans le brevet américain US 5,818,389 et permettant de détecter et localiser les interférences dans la bande GPS. Cependant ce procédé ne permet pas le rejet des interférences sur un signal GPS reçu.

L'invention a notamment pour but de rendre les stations de référence GNSS robustes aussi bien aux trajets indirects multiples qu'aux interférences liés aux sites d'installation desdites stations, ceci de manière auto-adaptable à l'environnement local de chaque site. Pour cela, elle propose de réaliser sur la voie de réception du signal d'intérêt une soustraction cohérente des sources perturbatrices, ces sources incluant les trajets indirects multiples et les interférences. Des voies de réception appelées par la suite « Voie de Référence des Perturbations » (VRP) sont créées, ces VRP permettant une isolation spatiale des trajets indirects multiples et des interférences. A cet effet, l'invention a pour objet un dispositif pour éliminer les signaux de perturbation reçus par une station GNSS de référence. Le dispositif comporte des moyens pour recevoir un signal d'intérêt émis par un satellite, lesdits moyens incluant une antenne principale à diagramme de rayonnement à ouverture sensiblement omnidirectionnelle. Il comporte également des moyens pour recevoir les signaux de perturbation, lesdits moyens incluant une antenne secondaire à diagramme de rayonnement directif à basses élévations et des moyens pour recevoir lesdits signaux de perturbation isolés du signal d'intérêt. Il comporte aussi des moyens pour soustraire les signaux de perturbation au signal d'intérêt, lesdits moyens incluant des moyens pour estimer la fonction de transfert différentielle W entre la voie de réception du signal d'intérêt et la voie de réception des signaux de perturbation, de manière à réaliser une soustraction cohérente desdits signaux.

Par exemple, les signaux de perturbation peuvent inclure des interférences et des trajets indirects issus de réflexions multiples du signal d'intérêt.

Avantageusement, les moyens pour recevoir les signaux de perturbation isolément du signal d'intérêt peuvent inclure des moyens pour maximiser le gain de l'antenne secondaire dans la direction des signaux de perturbation et des moyens pour minimiser le gain de l'antenne secondaire dans la direction du signal d'intérêt.

Par exemple, l'antenne principale et l'antenne secondaire peuvent être les antennes d'une même station LAAS, l'antenne principale pouvant être asservie en boucle fermée de manière à poursuivre le signal d'intérêt, l'antenne secondaire pouvant être asservie en boucle ouverte à l'antenne principale, de manière à orthogonaliser le signal d'intérêt et les signaux de perturbation.

Par exemple, la fonction de transfert différentielle W peut être estimée en calculant périodiquement $W = R^{-1}P$, où $R = E\{Y(k)Y^T(k)\}$ désigne la matrice de covariance de la voie de réception des signaux de perturbation et $P = {}_E\{X_{(k)}Y^T_{(k)}\}$ désigne le vecteur d'intercorrélation entre les deux voies, $X(k)$ et $Y(k)$ désignant des vecteurs associés à des échantillons synchronisés du signal d'intérêt et des signaux de perturbation respectivement.

Avantageusement, la soustraction peut être réalisée sur des signaux résultant du désétalement spectral par corrélation avec le code local, après compensation de la différence W desdites fonctions de transfert en calculant $\hat{S}(k) = X(k) - W^TY(k)$, où $\hat{S}(k)$ désigne une estimation d'un échantillon du signal d'intérêt après compensation des perturbations.

Par exemple, la compensation de la différence W peut être réalisée au moyen d'un filtre FIR disposé sur la voie de réception des perturbations, les coefficients du filtre FIR étant ajustés périodiquement.

Outre la simplicité du traitement de soustraction cohérente, un avantage clé de la présente invention est qu'elle ne nécessite pas de modéliser *a priori* la nature des sources de perturbation et des signaux interférents. Elle est aussi bien adaptée à la réflexion spéculaire qu'à la réflexion diffuse des trajets indirects multiples, aussi bien adaptée aux interférences bande étroite qu'aux interférences bande large, aussi bien adaptée aux ondes continues qu'aux ondes pulsées. Le même traitement s'applique indifféremment à tous types de perturbation et reste efficace sur tout type d'environnement local des stations de réception : il ne nécessite pas de contrôle *a priori* de ces environnements.

D'autres caractéristiques et avantages de l'invention apparaîtront à l'aide de la description qui suit faite en regard de dessins annexés qui représentent :

- la figure 1, par un schéma, un exemple de réalisation d'une station de référence LAAS selon l'invention;
- la figure 2, par un diagramme un exemple de combinaison de signaux selon l'invention;
- la figure 3, par un diagramme, un exemple de réalisation de l'invention appliquée à deux canaux de poursuite homologues des deux récepteurs d'une station LAAS.

Dans un mode de réalisation élémentaire couvrant une majorité des configurations des sites d'installation des stations de références GNSS, une antenne secondaire indépendante de l'antenne principale de réception des signaux d'intérêt émis par les satellites peut avantageusement être utilisée. La directivité de cette antenne secondaire peut permettre de recevoir les signaux incidents à basses élévations, les basses élévations formant le principal secteur de réception des trajets indirects multiples et des interférences des émetteurs sol, de façon isolée des signaux d'intérêt. Le gain de cette antenne secondaire étant plus important sur les sources de perturbation à faible élévation que sur les signaux d'intérêt à forte élévation situés en dehors de ce secteur, une VRP fournit une estimation des signaux perturbateurs qui permet, moyennant une modélisation adaptative des canaux de transmissions, une soustraction cohérente au signal fourni par l'antenne principale.

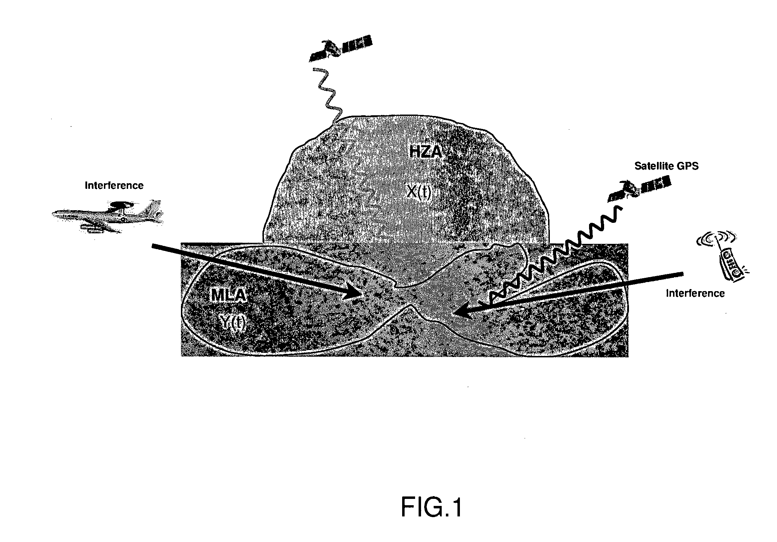

La figure 1 illustre par un schéma un exemple de réalisation de la présente invention dans une station de référence LAAS de type IMLA (Integrated Multipath Limiting Antenna). Cet exemple de réalisation peut comporter une antenne principale HZA (High Zenith Antenna) pour la réception à hautes élévations de signaux d'intérêt X(t) émis par un satellite. Cette antenne HZA a un diagramme de rayonnement directif à ouverture sensiblement omnidirectionnelle comme illustré par la figure 1. Le présent exemple de réalisation peut également comporter une antenne secondaire MLA (Multipath Limiting Antenna) pour la réception de signaux perturbateurs Y(t) à basses élévations, ces signaux perturbateurs Y(t) pouvant être émis par exemple par des radars aéroportés ou des réseaux de téléphonie mobile. Cette antenne MLA a également un diagramme de rayonnement directif. Il faut noter que X(t) est perturbé par Y(t), c'est-à-dire que X(t) inclut une composante perturbatrice que la présente invention se propose de compenser.

Le traitement spatial de l'antenne MLA, notamment le pilotage de son diagramme de rayonnement, est optimisé de façon à assurer en continu la meilleure indépendance possible entre une VRP formée par l'antenne MLA et des signaux d'intérêt X(t) provenant d'un satellite. Il s'agit notamment de maximiser le gain de l'antenne MLA dans la direction des signaux perturbateurs Y(t) et de minimiser le gain de l'antenne MLA dans la direction des signaux X(t). L'antenne MLA permet la formation de plusieurs VRPs, une VRP adaptée à chacun des satellites visibles. Ceci permet d'assurer, par orthogonalisation, la meilleure réjection possible entre les signaux satellites considérés et l'ensemble des sources de perturbation.

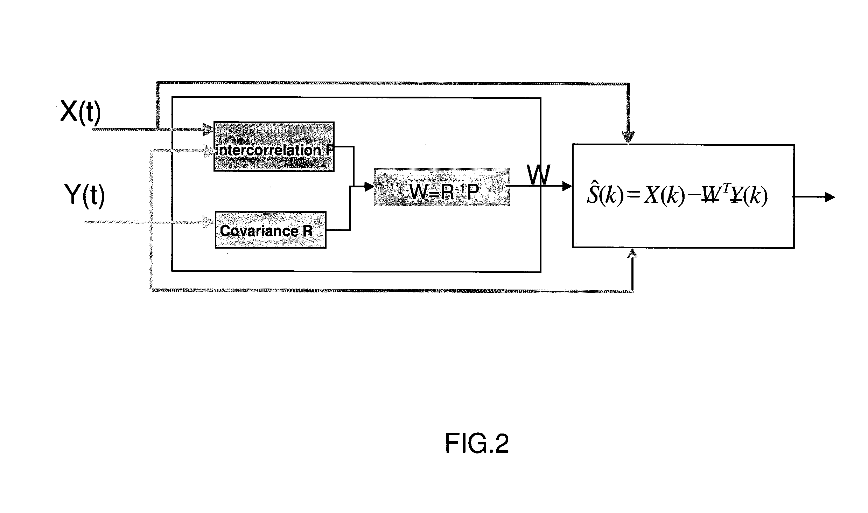

La figure 2 illustre par un diagramme un exemple de combinaison selon l'invention des signaux X(t) disponibles sur la voie principale avec les signaux Y(t) disponibles sur la VRP. Il s'agit de réaliser une soustraction cohérente des sorties des deux antennes, c'est-à-dire entre la voie de mesure de l'antenne principale HZA et les VRP de l'antenne MLA, ceci sans calibrer au préalable les voies de traitement qui s'étendent du port d'entrée de chacune des deux antennes jusqu'à la sortie des signaux pour soustraction, ces voies de traitement induisant notamment un biais de phase de code et de porteuse. Pour cela, une estimation adaptative de la fonction de transfert différentielle W entre les deux voies de traitement peut être réalisée. Ainsi, si l'on note $X(k)$ et $Y(k)$ les vecteurs associés à des échantillons synchronisés du signal X(t) et du signal Y(t) respectivement, alors W peut se calculer de la manière suivante :

$$W = R^{-1}P$$

où $R = E\{Y(k)Y^T(k)\}$ désigne la matrice de covariance de la VRP et $P = E\{X(k)Y^T(k)\}$ désigne la matrice d'intercorrélation entre la VRP et la voie principale.

La soustraction est réalisée après compensation de la différence W desdites fonctions de transfert de la manière suivante :

$$\hat{S}(k) = X(k) - W^T Y(k)$$

où $\hat{S}(k)$ désigne une estimation de l'échantillon du signal d'intérêt après compensation des perturbations.

Cette compensation peut être effectuée par filtrage transverse appliqué sur la VRP grâce à un filtre numérique FIR (Finite Impulse Response). Cette méthode permet de respecter les contraintes de performances imposées aux stations de référence afin de respecter la phase des signaux satellites, notamment en minimisant les variations de Temps de Propagation de Groupe (TPG) de la chaîne de traitement.

Le traitement s'appliquant à l'amplitude et à la phase des signaux reçus, il peut être appliqué à cadence réduite, ce qui diminue le coût, après démodulation des signaux et désétalement spectral par corrélation avec le code local, sur les signaux I&Q généralement échantillonnés à 50 Hz. Les signaux issus de la démodulation du code local sont ainsi débarrassés des biais provoqués par les trajets indirects multiples et les interférences, avant estimation du retard de groupe par le discriminateur de code et du retard de phase porteuse par le discriminateur de phase.

Dans la station LAAS du présent exemple de réalisation, l'antenne principale HZA et l'antenne secondaire MLA ont des diagrammes de directivité complémentaires en élévation pour la poursuite des signaux satellites. C'est le cas de toutes les stations LAAS. Ceci permet, par couplage des sorties, d'assurer une sensibilité de réception homogène pour toutes les élévations. Cependant, cette complémentarité ne contribue en rien à l'amélioration de la robustesse aux perturbations de l'environnement. La présente invention propose avantageusement de coupler les traitements de poursuite des deux chaînes de réception. En effet, les récepteurs GNSS mettent classiquement en oeuvre des chaînes de poursuite de type boucle de code (DLL : Delay Lock Loop) et boucle de phase (PLL : Phase Lock Loop) en boucle fermée asservie aux écarts d'erreurs. Ceci suppose donc que les deux chaînes de traitement reçoivent les mêmes satellites avec une sensibilité suffisante pour assurer la continuité de chacune des poursuites.

Or, la présente invention propose d'utiliser deux antennes afin justement de fournir des couvertures en élévation différentes pour pouvoir apprécier les perturbations sans être gêné par le signal d'intérêt : la présente invention compromet donc la poursuite simultanée des signaux satellites sur les deux récepteurs indépendants, puisque l'un des récepteurs ne dispose pas du signal d'intérêt. Cependant, grâce à l'augmentation du contraste, l'invention permet la poursuite de satellites même situés dans la zone de couverture en élévation de l'antenne secondaire. Ceci n'est pas possible avec les traitements classiques, qui ne permettent pas la séparation entre signal utile et perturbation dans cette zone.

L'invention propose d'asservir la consigne de poursuite du récepteur de la VRP à celle du récepteur de la voie principale. Ainsi le récepteur de la VRP fonctionne en boucle ouverte. En l'absence de signal d'intérêt sur la VRP, l'invention permet, après démodulation, de collecter les signaux propres aux seules perturbations. Le récepteur de la voie principale fonctionne pour sa part classiquement, c'est-à-dire en boucle fermée asservie sur la phase de réception du signal d'intérêt venant du satellite. Ce signal, initialement dégradé par les perturbations locales visibles par l'antenne principale, est ensuite débarrassé selon l'invention par soustraction cohérente adaptative des perturbations estimées sur la VRP.

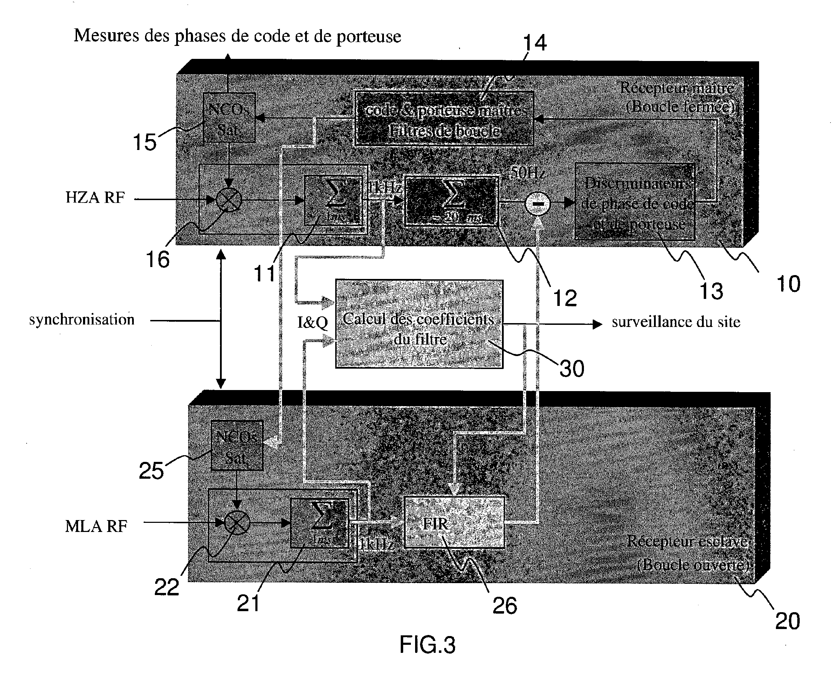

La figure 3 illustre par un diagramme un exemple de réalisation de l'invention appliquée à deux canaux de poursuite homologues des deux récepteurs 10 et 20 de la station LAAS poursuivant le même satellite. Les deux récepteurs 10 et 20 sont partiellement synchronisés. Ils sont couplés au travers de la commande de leurs NCOs respectifs 15 et 25 (Numerically-Controlled Oscillator), en phase de code et de porteuse. Seul le récepteur maître 10 de l'antenne principale fonctionne en boucle fermée. Le récepteur esclave 20 de l'antenne secondaire fonctionne en boucle ouverte, en utilisant le même asservissement que celui de la voie principale. Il faut donc idéalement autant de voies couplées que de satellites visibles. La soustraction cohérente entre les deux voies s'effectue après égalisation des différences existantes entre les fonctions de transfert des deux voies, c'est-à-dire des différences entre les centres de phases des antennes, entre les biais de phase de code et de porteuse des canaux analogiques RF. L'égalisation est réalisée de façon adaptative et ne nécessite pas de calibrage préalable des antennes et des chaînes RF. En pratique, elle est réalisée sur la base de l'estimation de la matrice d'inter-corrélation entre les voies d'antenne. A partir de la matrice d'inter-corrélation, on estime la fonction de transfert différentielle des deux voies, qui permet ainsi de compenser la différence de marche des perturbations reçues. Cette compensation est réalisée au moyen d'un filtre FIR 26 dont les coefficients sont calculés en temps réel par le module 30 pour s'adapter à l'évolution des fonctions de transfert des deux chaînes de réception, selon la direction d'arrivée des satellites. Le filtre FIR est appliqué uniquement sur la voie de référence de perturbation, afin de ne pas perturber les mesures du signal satellite réalisées sur la chaîne principale. L'estimation des coefficients du filtre FIR est faite de façon adaptative par un module 30 à partir des signaux I&Q prélevés après corrélation par le code local, qui conserve l'information de phase du signal reçu et qui permet d'avoir un rapport signal sur bruit significatif. Les erreurs dues aux perturbations évoluant doucement dans le temps, essentiellement sous l'effet des évolutions des fonctions de transferts des antennes et des trajets multiples selon la direction des satellites, il est possible de rafraîchir les coefficients à un rythme inférieur à 1 Hz, et d'utiliser des signaux démodulés en bande de base et après désétalement spectral par corrélation avec le code local. Un filtre FIR à moins de 20 coefficients est suffisant pour décrire la fonction de transfert différentielle avec précision. Cependant, le nombre de coefficients pourra être dimensionné en fonction des performances visées.

Dans un mode de réalisation amélioré, les VRP peuvent être adaptées à la configuration des sites d'installation des stations de référence, notamment aux sources connues de réflexion du signal et aux sources d'interférence.

Il faut bien comprendre que le mode de réalisation à partir de deux antennes séparées décrit précédemment n'est pas limitatif, d'autres modes de réalisation pouvant être envisagés, notamment à partir d'une antenne réseau à agilité de faisceau. En effet, l'antenne MLA d'une station LAAS peut être constituée d'un ensemble d'antennes mises en réseau avec une apodisation fixe, c'est-à-dire un coefficient de pondération par antenne dans le réseau, cette apodisation permettant de garantir le diagramme souhaité. L'invention propose de rendre cette apodisation adaptative, afin de créer un « trou » de réception dans la direction de chacun des satellites GNSS d'intérêt, comme illustré par la figure 1 qui représente un trou dans le diagramme de l'antenne secondaire, ce trou étant dans la direction d'un satellite GPS émettant un signal d'intérêt représenté comme une sinusoïde. Pour cela, l'invention propose de créer un « zéro » de la fonction de directivité de l'antenne secondaire dans la direction de chacun des satellites. Cette apodisation adaptative peut également être mise à profit pour modifier le diagramme de l'antenne MLA afin de tenir compte de la spécificité du site d'installation de la station GNSS de référence, afin d'améliorer les performances du système. En effet, il est possible d'augmenter le gain dans la ou les directions d'arrivée des interférences, afin de mieux les estimer et donc mieux les annuler par soustraction. Ceci nécessite le calcul d'un jeu de coefficients pour chacun des satellites poursuivis, chaque jeu contenant autant de coefficients que d'antennes considérées dans le réseau MLA. Le récepteur d'une station GNSS de référence étant fixe, cela permet un rafraîchissement des coefficients lent puisque la vitesse angulaire de défilement des satellites est également faible.

Un avantage de la présente invention est qu'elle permet directement une détection des interférences et donc facilite la surveillance du site de la station de référence.

Un autre avantage de la présente invention est qu'elle peut aussi permettre d'optimiser le diagramme de réception de l'antenne secondaire afin de prendre en compte les contraintes spécifiques à chaque site d'installation des stations de référence, comme la direction des trajets indirects multiples et des interférences, en regard des signaux d'intérêt.

Un autre avantage de la présente invention est que ses principes peuvent être étendus à tout dispositif muni de plusieurs voies VRP adaptées ou non à la configuration de chaque site de référence dont l'environnement a été caractérisé en termes de directions des sources d'interférences et/ou des sources de réflexion de trajets indirects multiples.

Un autre avantage de la présente invention est que la VRP peut être utilisée pour assurer une surveillance indépendante des sites d'installation, en vue de prévenir l'apparition d'interférences accidentelles ou volontaires, ou encore de sources de réflexion imprévues.

Un autre avantage de la présente invention est qu'elle peut être mise en oeuvre à faible coût dans une station LASS, en conservant l'architecture existante de ses récepteurs.

## Revendications

1. Dispositif pour éliminer les signaux de perturbation reçus par une station GNSS de référence, le dispositif étant **caractérisé en ce qu'**il comporte :

   - des moyens pour recevoir un signal d'intérêt émis par un satellite incluant une antenne principale à diagramme de rayonnement à ouverture sensiblement omnidirectionnelle;
   - des moyens pour recevoir les signaux de perturbation, lesdits moyens incluant une antenne secondaire à diagramme de rayonnement directif à basses élévations;
   - des moyens pour soustraire les signaux de perturbation au signal d'intérêt ;
   ledit dispositif étant **caractérisé en ce que** :

   - les moyens pour recevoir les signaux de perturbation incluent en outre des moyens pour recevoir lesdits signaux de perturbation isolés du signal d'intérêt; et
   - les moyens pour soustraire les signaux de perturbation au signal d'intérêt incluent en outre des moyens pour estimer la fonction de transfert différentielle W entre la voie de réception du signal d'intérêt et la voie de réception des signaux de perturbation, de manière à réaliser une soustraction cohérente desdits signaux.

2. Dispositif selon la revendication 1, **caractérisé en ce que** les moyens pour recevoir lesdits signaux de perturbation isolément du signal d'intérêt incluent:

   - des moyens pour maximiser le gain de l'antenne secondaire dans la direction des signaux de perturbation, et;
   - des moyens pour minimiser le gain de l'antenne secondaire dans la direction du signal d'intérêt.

3. Dispositif selon les revendications 1 et 2, **caractérisé en ce que** l'antenne principale et l'antenne secondaire sont les antennes d'une même station LAAS, l'antenne principale étant asservie en boucle fermée de manière à poursuivre le signal d'intérêt, l'antenne secondaire étant asservie en boucle ouverte à l'antenne principale, de manière à orthogonaliser le signal d'intérêt et les signaux de perturbation.

4. Dispositif selon l'une des revenfications 1 à 3 **caractérisé en ce que** la fonction de transfert différentielle W est estimée en calculant périodiquement $W = R^{-1}P$, où $R = E\{Y(k)Y^T(k)\}$ désigne la matrice de covariance de la voie de réception des signaux de perturbation et $P = E\{X(k)Y^T(k)\}$ désigne le vecteur d'intercorrélation entre les deux voies, $X(k)$ et $Y(k)$ désignant des vecteurs associés à des échantillons synchronisés du signal d'intérêt et des signaux de perturbation respectivement.

5. Dispositif selon l'une des revenfications 1 à 4, **caractérisé en ce que** la soustraction est réalisée sur des signaux résultant du désétalement spectral par corrélation avec le code local, après compensation de la différence W desdites fonctions de transfert en calculant $\hat{S}(k) = X(k)-W^TY(k)$, où $\hat{S}(k)$ désigne une estimation d'un échantillon du signal d'intérêt après compensation des perturbations et $X(k)$ et $Y(k)$ désignent des vecteurs associés à des échantillons synchronisés du signal d'intérêt et des signaux de perturbation respectivement..

6. Dispositif selon l'une des revenfications 5, **caractérisé en ce que** la compensation de la différence W est réalisée au moyen d'un filtre FIR disposé sur la voie de réception des perturbations, les coefficients du filtre FIR étant ajustés périodiquement.

## Patentansprüche

1. Vorrichtung zum Beseitigen von Störsignalen, die von einer GNSS-Referenzstation empfangen werden, wobei die Vorrichtung **dadurch gekennzeichnet ist, dass** sie Folgendes umfasst:

   - Mittel zum Empfangen eines Signals von Interesse, das von einem Satelliten gesendet wird, der eine Hauptantenne mit einem Strahlungsmuster mit einer im Wesentlichen omnidirektionalen Apertur aufweist;
   - Mittel zum Empfangen der Störsignale, wobei die Mittel eine sekundäre Antenne mit einem gerichteten Strahlungsmuster mit niedrigen Höhenwinkeln aufweisen;
   - Mittel zum Subtrahieren der Störsignale von dem Signal von Interesse;
   wobei die Vorrichtung **dadurch gekennzeichnet ist, dass**:

   - die Mittel zum Empfangen der Störsignale ferner Mittel zum Empfangen der Störsignale getrennt von dem Signal von Interesse umfassen; und
   - die Mittel zum Subtrahieren der Störsignale von dem Signal von Interesse ferner Mittel zum Schätzen der differentiellen Transferfunktion W zwischen dem Empfangskanal des Signals von Interesse und dem Empfangskanal der Störsignale umfasst, um eine kohärente Subtraktion der Signale zu erzielen.

2. Vorrichtung nach Anspruch 1, **dadurch gekennzeichnet, dass** die Mittel zum Empfangen der Störsignale getrennt von dem Signal von Interesse Folgendes beinhalten:

    - Mittel zum Maximieren des Gewinns der sekundären Antenne in der Richtung der Störsignale; und
    - Mittel zum Minimieren des Gewinns der sekundären Antenne in der Richtung des Signals von Interesse.

3. Vorrichtung nach den Ansprüchen 1 und 2, **dadurch gekennzeichnet, dass** die Hauptantenne und die sekundäre Antenne die Antennen einer selben LAAS-Station sind, wobei die Hauptantenne in einem geschlossenen Kreis geregelt wird, um das Signal von Interesse zu verfolgen, wobei die sekundäre Antenne in einem zur Hauptantenne offenen Kreis gesteuert wird, um das Signal von Interesse und die Störsignale zu orthogonalisieren.

4. Vorrichtung nach einem der Ansprüche 1 bis 3, **dadurch gekennzeichnet, dass** die differentielle Transferfunktion W durch periodisches Berechnen von $W = R^{-1}P$ geschätzt wird, wobei $R = E\{Y(k)Y^T(k)\}$ die Kovarianzmatrix des Empfangskanals der Störsignale bezeichnet und $P = E\{X(k)Y^T(k)\}$ den Interkorrelationsvektor zwischen den beiden Kanälen bezeichnet, wobei $X(k)$ und $Y(k)$ Vektoren bezeichnen, die jeweils mit synchronisierten Samples des Signals von Interesse bzw. der Störsignale assoziiert sind.

5. Vorrichtung nach einem der Ansprüche 1 bis 4, **dadurch gekennzeichnet, dass** die Subtraktion an Signalen durchgeführt wird, die von der spektralen Entspreizung durch Korrelation mit dem lokalen Code resultieren, nach der Kompensation der Differenz W der Transferfunktionen durch Berechnen $\hat{S}(k) = X(k)-W^TY(k)$, wobei $\hat{S}(k)$ eine Schätzung eines Sample des Signals von Interesse nach der Kompensation der Störungen bezeichnet und $X(k)$ und $Y(k)$ Vektoren bezeichnen, die mit synchronisierten Samples jeweils des Signals von Interesse bzw. der Störsignale assoziiert sind.

6. Vorrichtung nach Anspruch 5, **dadurch gekennzeichnet, dass** die Kompensation der Differenz W mittels eines FIR-Filters durchgeführt wird, das auf dem Empfangskanal für die Störungen angeordnet ist, wobei die Koeffizienten des FIR-Filters periodisch justiert werden.

## Claims

1. A device for eliminating the disturbance signals received by a reference GNSS station, said device being **characterised in that** it comprises:

    - means for receiving a signal of interest transmitted by a satellite including a main antenna having a radiating pattern with a substantially omnidirectional aperture;
    - means for receiving said disturbance signals, said means including a secondary antenna with a directive radiating pattern at lower elevations;
    - means for subtracting said disturbance signals from said signal of interest; said device being **characterised in that**:

        - said means for receiving said disturbance signals further comprise means for receiving said disturbance signals isolated from said signal of interest; and
        - said means for subtracting said disturbance signals from said signal of interest further comprise means for estimating the differential transfer function W between the reception channel of said signal of interest and the reception channel of said disturbance signals, so as to carry out a coherent subtraction of said signals.

2. The device according to claim 1, **characterised in that** said means for receiving said disturbance signals isolated from said signal of interest include:

    - means for maximising the gain of said secondary antenna toward said disturbance signals; and
    - means for minimising the gain of said secondary antenna toward said signal of interest.

3. The device according to claims 1 and 2, **characterised in that** said main antenna and said secondary antenna are the antennae of the same LAAS station, said main antenna being controlled in a closed loop so as to track said signal of interest, said secondary antenna being controlled in a loop open to said main antenna so as to orthogonalise said signal of interest and said disturbance signals.

4. The device according to any one of claims 1 to 3, **characterised in that** said differential transfer function W is estimated by periodically calculating $W = R^{-1}P$, where $R = E\{Y(k)Y^T(k)\}$ designates the covariance matrix of the reception channel of said disturbance signals and $P = E\{X(k)Y^T(k)\}$ designates the intercorrelation vector between the two channels, with *X(k)* and *Y(k)* designating vectors associated with synchronised samples of said signal of interest and of said disturbance signals, respectively.

5. The device according to any one of claims 1 to 4, **characterised in that** the subtraction is carried out on signals resulting from the spectral despreading by correlation with the local code, after compensating for the difference W of said transfer functions by calculating $\hat{S}(k) = X(k)-W^T Y(k)$, where $\hat{S}(k)$ designates an estimate of a sample of said signal of interest after compensating for the disturbances and *X(k)* and *Y(k)* designate vectors associated with synchronised samples of said signal of interest and of said disturbance signals, respectively.

6. The device according to claim 5, **characterised in that** compensating for the difference W is carried out by means of an FIR filter arranged on the reception channel for the disturbances, with the coefficients of the FIR filter being periodically adjusted.

FIG.1

FIG.2

EP 2 656 110 B1

Mesures des phases de code et de porteuse

code & porteuse maitres
Filtres de boucle — 14

NCOs
Sat. — 15

Récepteur maître
(Boucle fermée)

HZA RF

$\otimes$ — 16

$\sum_{1ms}$ — 11

1kHz

$\sum_{20ms}$ — 12

50Hz

$\ominus$

Discriminateurs
de phase de code
et de porteuse — 13

10

synchronisation

I&Q

Calcul des coefficients
du filtre — 30

surveillance du site

NCOs
Sat. — 25

MLA RF

$\otimes$ — 22

$\sum_{1ms}$ — 21

1kHz

FIR — 26

Récepteur esclave
(Boucle ouverte)

20

FIG.3

EP 2 656 110 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080174477 A
- US 6166690 A
- US 5818389 A